# EUROPÄISCHE PATENTANMELDUNG

(11) **EP 3 979 401 A1**
(43) Veröffentlichungstag der Anmeldung: **06.04.2022**
(21) Anmeldenummer: 20199270.8
(22) Anmeldetag: 30.09.2020
(51) Int. Cl.: H01M 50/213, H01M 50/10

(54) **AUFBAU FÜR EINEN AKKUPACK ZUR VERSORGUNG EINES ELEKTRISCH ANGETRIEBENEN BEARBEITUNGSGERÄTS MIT ELEKTRISCHER ANTRIEBSLEISTUNG, AKKUPACK, BEARBEITUNGSSYSTEM UND VERFAHREN ZUR HERSTELLUNG EINES AKKUPACKS**

(71) Anmelder: Andreas Stihl AG & Co. KG, 71336 Waiblingen (DE)
(72) Erfinder: SÄMANN, Christian, 70372 Stuttgart (DE); SCHUMAYER, Florian, 73235 Weilheim an der Teck (DE)
(74) Vertreter: Patentanwälte Ruff, Wilhelm, Beier, Dauster & Partner mbB

(57) **Zusammenfassung**

Die Erfindung bezieht sich auf einen Aufbau (1) für einen Akkupack (50) zur Versorgung eines elektrisch angetriebenen Bearbeitungsgeräts (110) mit elektrischer Antriebsleistung (AL), wobei der Aufbau (1) aufweist:
- eine Anzahl von Zellhalterteilen (2, 3), wobei die Anzahl von Zellhalterteilen (2, 3) zum Halten von Akkumulatorzellen (51) ausgebildet ist,
dadurch gekennzeichnet,
- dass die Anzahl von Zellhalterteilen (2, 3) mindestens zwei Zellhalterteile (2, 3) aufweist, wobei mindestens zwei der Zellhalterteile (2, 3) zum Anordnen beieinander in einer Halteanordnung (HA) und in der Halteanordnung (HA) gemeinsam zum Halten von den Akkumulatorzellen (51) ausgebildet sind, wobei die Zellhalterteile (2, 3) in der Halteanordnung (HA) gemeinsam mindestens einen Großteil einer Füllform (4) bilden, wobei die Füllform (4) zum Einfüllen eines Schutzstoffes (53) zum Umschließen mindestens eines Teils einer Akkupackelektronik (52) ausgebildet ist, und/oder
- dass der Aufbau (1) mindestens eine Gussbaugruppe (5, 6) aufweist, wobei die Gussbaugruppe (5, 6) eines der Anzahl von Zellhalterteilen (2, 3) und mindestens einen umgossenen Zellkontaktierer (7, 8) in sich vereint, wobei der Zellkontaktierer (7, 8) zum Kontaktieren mindestens eines Zellterminals (51T) mindestens einer der gehaltenen Akkumulatorzellen (51) ausgebildet ist.

## Beschreibung

### ANWENDUNGSGEBIET UND STAND DER TECHNIK

Die Erfindung bezieht sich auf einen Aufbau für einen Akkupack zur Versorgung eines elektrisch angetriebenen Bearbeitungsgeräts mit elektrischer Antriebsleistung, einen Akkupack zur Versorgung eines elektrisch angetriebenen Bearbeitungsgeräts mit elektrischer Antriebsleistung aufweisend einen solchen Aufbau, ein Bearbeitungssystem aufweisend einen solchen Akkupack und ein elektrisch angetriebenes Bearbeitungsgerät und ein Verfahren zur Herstellung eines solchen Akkupacks.

### AUFGABE UND LÖSUNG

Der Erfindung liegt als Aufgabe die Bereitstellung eines Aufbaus für einen Akkupack zur Versorgung eines elektrisch angetriebenen Bearbeitungsgeräts mit elektrischer Antriebsleistung, eines Akkupacks zur Versorgung eines elektrisch angetriebenen Bearbeitungsgeräts mit elektrischer Antriebsleistung aufweisend einen solchen Aufbau, eines Bearbeitungssystems aufweisend einen solchen Akkupack und ein elektrisch angetriebenes Bearbeitungsgerät und eines Verfahrens zur Herstellung eines solchen Akkupacks zugrunde, wobei das Verfahren und der Aufbau und somit der Akkupack und somit das Bearbeitungssystem jeweils verbesserte Eigenschaften aufweisen.

Die Erfindung löst die Aufgabe durch die Bereitstellung eines Aufbaus mit den Merkmalen des Anspruchs 1, eines Akkupacks mit den Merkmalen des Anspruchs 12, eines Bearbeitungssystems mit den Merkmalen des Anspruchs 14 und eines Verfahrens mit den Merkmalen des Anspruchs 15. Vorteilhafte Weiterbildungen und/oder Ausgestaltungen der Erfindung sind in den abhängigen Ansprüchen beschrieben.

Der erfindungsgemäße Aufbau ist für einen Akkupack (Englisch: battery pack) zur Versorgung eines elektrisch angetriebenen Bearbeitungsgeräts, insbesondere Garten-, Forst- und/oder Baubearbeitungsgeräts, bzw. eines Elektrowerkzeugs mit elektrischer Antriebsleistung ausgebildet bzw. konfiguriert. Der Aufbau umfasst bzw. weist eine Anzahl von Zellhalterteilen auf. Die Anzahl von Zellhalterteilen ist zum, insbesondere unmittelbaren, Halten bzw. Fixieren von Akkumulatorzellen ausgebildet bzw. konfiguriert, insbesondere durch Berührung.

Zusätzlich umfasst bzw. weist die Anzahl von Zellhalterteilen mindestens, insbesondere genau, zwei Zellhalterteile auf. Mindestens zwei der, insbesondere die, insbesondere beiden, Zellhalterteile sind zum Anordnen beieinander, insbesondere aneinander, insbesondere in Berührung miteinander, in einer Halteanordnung bzw. Haltestellung und in der Halteanordnung gemeinsam bzw. zusammen zum Halten von den Akkumulatorzellen ausgebildet bzw. konfiguriert. Die, insbesondere beiden, Zellhalterteile bilden bzw. definieren in der Halteanordnung, insbesondere nur, gemeinsam bzw. zusammen mindestens einen Großteil einer Füllform, insbesondere vollständig die Füllform, bzw. eines Füllbechers bzw. einer Füllwanne, insbesondere einer Innenfläche der Füllform. Die Füllform ist zum Einfüllen eines Schutzstoffes zum Umschließen mindestens eines Teils einer Akkupackelektronik, insbesondere auf allen Seiten und/oder der vollständigen Akkupackelektronik, ausgebildet bzw. konfiguriert.

Zusätzlich oder alternativ umfasst bzw. weist der Aufbau mindestens eine, insbesondere einstückige, Gussbaugruppe bzw. ein Gussfertigteil auf. Die Gussbaugruppe vereint in sich eines der Anzahl von Zellhalterteilen und mindestens einen, insbesondere auf allen Seiten, umgossenen, insbesondere elektrisch leitenden, Zellkontaktierer. Der Zellkontaktierer ist zum, insbesondere unmittelbaren, Kontaktieren mindestens eines, insbesondere elektrischen, Zellterminals bzw. eines Zellpols mindestens einer der gehaltenen Akkumulatorzellen ausgebildet bzw. konfiguriert, insbesondere durch Berührung.

Dies, insbesondere das Bilden der Füllform mindestens zu dem Großteil mittels der Zellhalterteile in der Halteanordnung gemeinsam, ermöglicht einen Synergieeffekt und somit einen Einspareffekt und/oder eine einfache und/oder schnelle Herstellung bzw. Montage des Akkupacks.

Zusätzlich oder alternativ ermöglicht dies, insbesondere die Gussbaugruppe in sich eines der Anzahl von Zellhalterteilen und den mindestens einen umgossenen Zellkontaktierer vereinend, ein Herstellen bzw. eine Herstellung der Gussbaugruppe, insbesondere nur, in einem, insbesondere einzigen, Herstellungsschritt, insbesondere Gießschritt, und/oder eine Fehler-Vermeidung und/oder, insbesondere somit, eine einfache und/oder schnelle Herstellung des Akkupacks, insbesondere im Unterschied zu einem Aufbau mit einem Kabelbaum aufweisend mindestens einen Zellkontaktierer.

Insbesondere kann die Anzahl von Zellhalterteilen zum Halten von gleichen, insbesondere typ- und/oder baugleichen, Akkumulatorzellen ausgebildet sein. Zusätzlich oder alternativ kann die Anzahl von Zellhalterteilen, insbesondere die, mindestens zwei Zellhalterteile aufweisen. Mindestens zwei der, insbesondere die, Zellhalterteile sind zum Anordnen beieinander in einer, insbesondere der, Halteanordnung und in der Halteanordnung gemeinsam zum Halten von den Akkumulatorzellen ausgebildet. Weiter zusätzlich oder alternativ können zeitlich vor einem Anordnen der Zellhalterteile beieinander in der Halteanordnung die Zellhalterteile zum Aufnehmen der bzw. Bestücken mit den Akkumulatorzellen, insbesondere zwischen die Zellhalterteile, voneinander entfernt bzw. beabstandet sein.

Die Zellhalterteile nicht in der Halteanordnung und/oder jeweils alleine bzw. voneinander entfernt brauchen oder können mindestens den Großteil der Füllform nicht bilden. Zusätzlich oder alternativ kann Großteil mindestens 70 Prozent (%), insbesondere mindestens 80 %, insbesondere mindestens 90 %, bedeuten. Weiter zusätzlich oder alternativ können die Zellhalterteile jeweils mindestens einen Teil eines Formbodens und/oder einer Formseitenwand der Füllform aufweisen bzw. definieren. Weiter zusätzlich oder alternativ kann die Füllform zum Aufnehmen mindestens eines Teils, insbesondere des mindestens einen Teils, der Akkupackelektronik, insbesondere der vollständigen Akkupackelektronik, insbesondere und zum Einfüllen des Schutzstoffes zum Umschließen des mindestens einen Teils der aufgenommenen Akkupackelektronik, ausgebildet sein. Weiter zusätzlich oder alternativ kann Teil mindestens 25 %, insbesondere mindestens 50 %, insbesondere mindestens 75 %, bedeuten. Weiter zusätzlich oder alternativ kann die Füllform ein Füllbecher bzw. eine Füllwanne und/oder eine Gießform bzw. ein Gießbecher bzw. ein Vergussbecher bzw. eine Vergusswanne sein und/oder zum Eingießen des Schutzstoffes in Form einer Vergussmasse und/oder zum Einfüllen des Schutzstoffes in Form eines Schutzlacks und/oder eines Schutzschaums ausgebildet sein. Weiter zusätzlich oder alternativ kann die Füllform in Richtung der, insbesondere gehaltenen, Akkumulatorzellen für den Schutzstoff dicht bzw. undurchlässig sein, insbesondere durch die Berührung der Zellhalterteile miteinander mindestens, insbesondere nur, im Bereich der Füllform. Dies kann ermöglichen, dass der eingefüllte Schutzstoff aus der Füllform nicht entweichen kann.

Die Gussbaugruppe kann ein, insbesondere einstückiges, Gusselement aufweisen, wobei das Gusselement das Zellhalterteil aufweisen kann und den Zellkontaktierer, insbesondere auf allen Seiten, umschließen kann. Zusätzlich oder alternativ kann die Gussbaugruppe, insbesondere das Gusselement, vorgegossen sein. Weiter zusätzlich oder alternativ kann die Gussbaugruppe, insbesondere das Gusselement, insbesondere nur, in einem, insbesondere einzigen, Herstellungsschritt, insbesondere Gießschritt, hergestellt, insbesondere gegossen, sein. Weiter zusätzlich oder alternativ kann die Gussbraugruppe, insbesondere das Gusselement, zum Anordnen in der Halteanordnung ausgebildet sein. Weiter zusätzlich oder alternativ kann das Zellhalterteil, insbesondere das Gusselement, elektrisch isolierend sein. Weiter zusätzlich oder alternativ kann das Kontaktieren elektrisch, insbesondere und mechanisch, sein. Weiter zusätzlich oderalternativ kann der Zellkontaktierer zum, insbesondere unmittelbaren, elektrischen Verbinden von mindestens zwei Zellterminals von mindestens zwei der gehaltenen Akkumulatorzellen miteinander ausgebildet sein.

In einer Weiterbildung der Erfindung sind die Zellhalterteile zum Anordnen in einer Anordnungsrichtung und zum Halten von länglichen bzw. prolaten Akkumulatorzellen mit, insbesondere jeweiligen, Zelllängsachen nicht-orthogonal, insbesondere parallel, zu der Anordnungsrichtung ausgebildet bzw. konfiguriert. Dies ermöglicht ein einfaches Aufnehmen der bzw. Bestücken mit den Akkumulatorzellen, insbesondere zwischen die Zellhalterteile, insbesondere zeitlich vor dem Anordnen, und/oder eine Kompaktheit des Aufbaus, insbesondere des Akkupacks. Insbesondere kann eine, insbesondere jeweilige, Länge der Akkumulatorzellen größer als ein, insbesondere jeweiliger, Durchmesser der Akkumulatorzellen sein. Zusätzlich oder alternativ können die Zellhalterteile, insbesondere jeweils, zum Halten von den, insbesondere länglichen, Akkumulatorzellen im Bereich einer, insbesondere jeweiligen, Stirnseite der, insbesondere länglichen, Akkumulatorzellen ausgebildet sein. Weiter zusätzlich oder alternativ kann das mindestens eine Zellterminal an mindestens einer Stirnseite der, insbesondere länglichen, Akkumulatorzelle angeordnet sein.

In einer Weiterbildung der Erfindung sind die Zellhalterteile zum Anordnen in einer, insbesondere der, Anordnungsrichtung ausgebildet bzw. konfiguriert. Die Füllform ist zum Aufnehmen mindestens eines Teils, insbesondere des mindestens einen Teils, der Akkupackelektronik, insbesondere der vollständigen Akkupackelektronik, und zum Einfüllen, insbesondere Eingießen, des Schutzstoffes, insbesondere in Form der Vergussmasse, in einer zu der Anordnungsrichtung nicht-parallelen, insbesondere orthogonalen, Aufnahme- und Einfüllrichtung, insbesondere Aufnahme- und Eingießrichtung, ausgebildet bzw. konfiguriert. In anderen Worten: die Füllform kann mit einer Aufnahme- und Einfüllöffnung zum Aufnehmen des mindestens einen Teils der Akkupackelektronik und zum Einfüllen des Schutzstoffes in der zu der Anordnungsrichtung nicht-parallelen, insbesondere orthogonalen, Aufnahme- und Einfüllrichtung angeordnet bzw. ausgerichtet sein. Dies ermöglicht, dass das Aufnehmen und/oder das Einfüllen einfach sein können/kann, insbesondere nicht blind ausgeführt werden braucht oder kann, und/oder eine Kompaktheit des Aufbaus, insbesondere des Akkupacks.

In einer Weiterbildung der Erfindung sind die Zellhalterteile zum Anordnen in einer, insbesondere der, Anordnungsrichtung ausgebildet bzw. konfiguriert. Die Füllform ist zum Aufnehmen mindestens eines Teils, insbesondere des mindestens einen Teils, der Akkupackelektronik, insbesondere der vollständigen Akkupackelektronik, aufweisend bzw. umfassend mindestens eine Leiterplatte mit einer Plattenebene nicht-orthogonal, insbesondere parallel, zu der Anordnungsrichtung ausgebildet bzw. konfiguriert. Zusätzlich oder alternativ ist die Füllform zum Aufnehmen mindestens eines Teils, insbesondere des mindestens einen Teils, der Akkupackelektronik, insbesondere der vollständigen Akkupackelektronik, aufweisend bzw. umfassend mindestens eine, insbesondere die mindestens eine, Leiterplatte mit einer, insbesondere der, Plattenebene nicht-orthogonal, insbesondere parallel, zu einer Seite, insbesondere einer Umfangsseite, insbesondere an der Seite, mindestens eines der Zellhalterteile ausgebildet bzw. konfiguriert. Dies ermöglicht eine Kompaktheit des Aufbaus, insbesondere des Akkupacks.

In einer Weiterbildung der Erfindung hat bzw. weist mindestens eines der Zellhalterteile, insbesondere die Gussbaugruppe, insbesondere jeweils, eine Kontaktierungsseite bzw. eine Terminalseite für ein, insbesondere das, Kontaktieren mindestens eines, insbesondere des mindestens einen und/oder elektrischen, Zellterminals mindestens einer, insbesondere der mindestens einen, der gehaltenen Akkumulatorzellen auf, insbesondere mittels eines, insbesondere des, Zellkontaktierers. Die Zellhalterteile haben bzw. weisen, insbesondere in der Halteanordnung, gemeinsam mindestens eine, insbesondere die, von der Kontaktierungsseite verschiedene, insbesondere abgewandte, Umfangsseite auf. Die Füllform ist, insbesondere nur, an der Umfangsseite, insbesondere vollständig, angeordnet. Dies ermöglicht eine Kompaktheit des Aufbaus, insbesondere des Akkupacks, und/oder eine Zugänglichkeit des Zellkontaktierers, soweit vorhanden. Insbesondere können die Zellhalterteile in der Halteanordnung gemeinsam quaderförmig sein. Insbesondere können die Kontaktierungsseite und die Umfangsseite, insbesondere jeweils, Quaderseiten sein.

Insbesondere kann der Zellkontaktierer zum Kontaktieren des mindestens einen Zellterminals der mindestens einen der gehaltenen Akkumulatorzellen durch eine kraftschlüssige Verbindung ausgebildet sein.

In einer Weiterbildung der Erfindung umfasst bzw. weist die Gussbaugruppe ein, insbesondere einstückiges und/oder das, Gusselement auf. Das Gusselement umfasst bzw. weist das Zellhalterteil auf und umschließt den Zellkontaktierer, insbesondere auf allen Seiten, und umfasst bzw. weist mindestens eine Aussparung, insbesondere ein Fenster bzw. ein Durchgangsloch, auf. Die Aussparung lässt einen Teil einer Außenseite und einen Teil einer der Außenseite gegenüberliegenden Innenseite des Zellkontaktierers zum Herstellen einer stoffschlüssigen Verbindung, insbesondere einer Schweißverbindung, mit dem Zellterminal zum Kontaktieren des Zellterminals frei, insbesondere zugänglich. Dies ermöglicht ein Herstellen der stoffschlüssigen Verbindung von außen durch den Zellkontaktierer hindurch und somit eine besonders einfache und/oder schnelle Herstellung bzw. Montage des Akkupacks.

In einer Weiterbildung der Erfindung umfasst bzw. weist die Gussbaugruppe mindestens eine, insbesondere auf allen Seiten, umgossene elektrische Leitung auf. Die Leitung ist zum elektrischen Verbinden des Zellkontaktierers mit einer, insbesondere der, Akkupackelektronik ausgebildet bzw. konfiguriert. Dies ermöglicht eine Fehler-Vermeidung und/oder, insbesondere somit, eine einfache und/oder schnelle Herstellung des Akkupacks, insbesondere im Unterschied zu einem Akkupack mit einem Kabelbaum aufweisend mindestens einen Zellkontaktierer, und/oder eine elektrische Isolation der Leitung. Insbesondere kann die Leitung eine Messleitung, insbesondere für eine Messelektronik der Akkupackelektronik, oder eine Leistungsleitung, insbesondere für eine Leistungselektronik der Akkupackelektronik, sein.

In einer Ausgestaltung der Erfindung ist der Zellkontaktierer, insbesondere nur, an einer, insbesondere der, Kontaktseite des Zellhalterteils, insbesondere vollständig, angeordnet. Die Leitung verläuft mindestens abschnittsweise, insbesondere vollständig und/oder nur, an einer von der Kontaktierungsseite verschiedenen, insbesondere abgewandten, Umfangsseite des Zellhalterteils entlang. Dies ermöglicht eine räumliche Trennung der Leitung von mindestens einem weiteren Zellkontaktierer und/oder mindestens einer weiteren Leitung, soweit vorhanden, und/oder, insbesondere somit, eine Reduzierung einer EMV-Störanfälligkeit.

In einer Weiterbildung, insbesondere einer Ausgestaltung, der Erfindung ist der Zellkontaktierer starr bzw. unflexibel, insbesondere umfasst bzw. weist der Zellkontaktierer ein Blech auf, insbesondere ist das Blech. Zusätzlich oder alternativ ist die Leitung, soweit vorhanden, starr bzw. unflexibel, insbesondere umfasst bzw. weist die Leitung ein Blech auf, insbesondere ist das Blech. Dies ermöglicht, dass das Kontaktieren und/oder das Verbinden, insbesondere durch eine stoffschlüssige Verbindung, insbesondere eine Lötverbindung, einfach sein können/kann, insbesondere im Unterschied zu einem Aufbau mit einem Kabelbaum aufweisend mindestens einen flexiblen Zellkontaktierer und/oder eine flexible Leitung.

In einer Weiterbildung der Erfindung vereint die Gussbaugruppe in sich mindestens einen, insbesondere auf allen Seiten, umgossenen, insbesondere elektrisch leitenden, Packkontaktierer. Der Packkontaktierer ist zum, insbesondere unmittelbaren, Kontaktieren mindestens eines, insbesondere elektrischen, Gerätekontaktierers des Bearbeitungsgeräts ausgebildet bzw. konfiguriert, insbesondere durch Berührung. Dies ermöglicht ein besonderes gutes Herstellen bzw. eine besonders gute Herstellung der Gussbaugruppe und/oder eine besonders gute Fehler-Vermeidung und/oder, insbesondere somit, eine besonders einfache und/oder schnelle Herstellung des Akkupacks. Insbesondere kann das Gusselement, soweit vorhanden, den Packkontaktierer, insbesondere auf allen Seiten, umschließen. Zusätzlich oder alternativ kann das Kontaktieren elektrisch, insbesondere und mechanisch, sein. Weiter zusätzlich oder alternativ kann der Packkontaktierer zum elektrischen Verbinden mit einer, insbesondere der, Akkupackelektronik sein.

In einer Weiterbildung der Erfindung umfasst bzw. weist die Gussbaugruppe ein, insbesondere einstückiges und/oder das, Gusselement auf. Das Gusselement umfasst bzw. weist das Zellhalterteil auf und umschließt den Zellkontaktierer, insbesondere auf allen Seiten, und ist in sich grenzflächenfrei. Dies ermöglicht ein Herstellen bzw. eine Herstellung des Gusselements, insbesondere nur, in einem, insbesondere einzigen, Herstellungsschritt, insbesondere Gießschritt, und/oder, insbesondere somit, eine einfache und/oder schnelle Herstellung des Akkupacks.

In einer Weiterbildung der Erfindung ist die Gussbaugruppe eine Spritzgussbaugruppe bzw. ein Spritzgussfertigteil, insbesondere das Gusselement ein Spritzgusselement. Der Zellkontaktierer ist, insbesondere auf allen Seiten, umspritzt, insbesondere in Form des Spritzgusselements. Dies ermöglicht ein besonderes einfaches und/oder besonders schnelles Herstellen der Gussbaugruppe und/oder, insbesondere somit, eine besonders einfache und/oder besonders schnelle Herstellung des Akkupacks.

Der erfindungsgemäße Akkupack ist zur, insbesondere automatischen, Versorgung eines, insbesondere des, elektrisch angetriebenen Bearbeitungsgeräts mit elektrischer Antriebsleistung ausgebildet bzw. konfiguriert. Der Akkupack umfasst bzw. weist einen, insbesondere den, Aufbau wie vorhergehend beschrieben und, insbesondere die, Akkumulatorzellen auf. Die Akkumulatorzellen sind mittels der Anzahl von Zellhalterteilen gehalten.

Zusätzlich umfasst bzw. weist der Aufbau eine, insbesondere die, Akkupackelektronik und einen, insbesondere den, Schutzstoff auf. Der Schutzstoff ist in die Füllform mindestens zu dem Großteil mittels der Zellhalterteile in der Halteanordnung gemeinsam gebildet eingefüllt. Der eingefüllte Schutzstoff umschließt mindestens einen, insbesondere den mindestens einen, Teil der Akkupackelektronik, insbesondere auf allen Seiten und/oder die vollständige Akkupackelektronik.

Zusätzlich oder alternativ ist mindestens ein, insbesondere das mindestens eine, Zellterminal mindestens einer, insbesondere der mindestens einen, der gehaltenen Akkumulatorzellen mittels des umgossenen Zellkontaktierers der Gussbaugruppe eines der Anzahl von Zellhalterteilen und den mindestens einen umgossenen Zellkontaktierer in sich vereinend kontaktiert.

Insbesondere können die Akkumulatorzellen zur Versorgung des Bearbeitungsgeräts mit der Antriebsleistung ausgebildet sein. Zusätzlich oder alternativ können die Akkumulatorzellen jeweils einzelne wiederaufladbare Speicherelemente für elektrische Energie auf elektrochemischer Basis sein. Insbesondere können die Akkumulatorzellen Lithium-Ionen-Akkumulatorzellen sein. Weiter zusätzlich oder alternativ können die Akkumulatorzellen elektrisch zusammengeschaltet sein, insbesondere parallel oder seriell geschaltet sein, insbesondere mittels mindestens eines, insbesondere des mindestens einen, Zellkontaktierers. Insbesondere können die Zellterminals, insbesondere jeweils, nächster Akkumulatorzellen miteinander, insbesondere unmittelbar, elektrisch verbunden sein. Weiter zusätzlich oder alternativ können die Akkumulatorzellen gleich, insbesondere typ- und/oder baugleich, sein. Weiter zusätzlich oder alternativ können die Akkumulatorzellen Rundzellen oder prismatische Zellen sein. Weiter zusätzlich oder alternativ können die Akkumulatorzellen mittels der Zellhalterteile in der Halteanordnung gemeinsam gehalten sein.

Der Schutzstoff kann zum Schutz vor Feuchtigkeit, Staub, Fremdkörpern, Wasser und/oder Berührung und/oder zur elektrischen Isolation, d. h. der Erhöhung der Spannungsfestigkeit, und/oder zur Wärmeableitung und/oder zur Fixierung von Teilen untereinander bzw. zur Erhöhung der mechanischen Stabilität und/oder der Vibrations- und Schockfestigkeit, insbesondere des umschlossenen Teils, der Akkupackelektronik ausgebildet sein. In anderen Worten: der Schutzstoff kann elektrisch isolierend und/oder wärmeleitend sein. Zusätzlich oder alternativ kann der Schutzstoff in Form der Vergussmasse ein Gießharz, insbesondere ein Kunstharz, sein. Weiter zusätzlich oder alternativ kann der Schutzstoff in einem festen Zustand, insbesondere ausgehärtet, sein. Weiter zusätzlich oder alternativ kann mindestens ein, insbesondere der mindestens eine, Teil der Akkupackelektronik, insbesondere die vollständige Akkupackelektronik, in der Füllform aufgenommen sein, insbesondere und der eingefüllte Schutzstoff kann den mindestens einen Teil der aufgenommenen Akkupackelektronik umschließen.

Weiter zusätzlich oder alternativ kann die Gussbaugruppe, insbesondere das Gusselement, in der Halteranordnung angeordnet sein.

Der Akkupack kann, insbesondere die Akkumulatorzellen können, eine maximale elektrische Antriebsleistung von minimal 10 Watt (W), insbesondere von minimal 100 W, insbesondere von minimal 1 Kilowatt (kW), insbesondere von minimal 2 kW, und/oder von maximal 10 kW, insbesondere von maximal 5 kW, insbesondere von 3 kW, aufweisen. Zusätzlich oder alternativ kann der Akkupack, insbesondere können die Akkumulatorzellen, eine Nennspannung von minimal 1 Volt (V), insbesondere von minimal 2 V, insbesondere von minimal 5 V, insbesondere von minimal 10 V, insbesondere von minimal 20 V, und/oder von maximal 100 V, insbesondere von maximal 50 V, insbesondere von 36 V, aufweisen. Weiter zusätzlich oder alternativ kann der Akkupack, insbesondere können die Akkumulatorzellen, einen, insbesondere elektrischen, maximalen Energieinhalt von minimal 100 Wattstunden (Wh), insbesondere von minimal 200 Wh, und/oder von maximal 4000 Wh, insbesondere von maximal 2000 Wh, insbesondere von maximal 1000 Wh, insbesondere von maximal 500 Wh, insbesondere von 337 Wh, aufweisen.

In einer Weiterbildung der Erfindung umfasst bzw. weist die Akkupackelektronik eine, insbesondere die, Mess-, Leistungs-, Benutzerschnittstellen- und/oder Übertragungselektronik auf, insbesondere ist die Mess-, Leistungs-, Benutzerschnittstellen- und/oder Übertragungselektronik. Insbesondere kann die Messelektronik zur, insbesondere automatischen, Messung von Eigenschaften, insbesondere Spannungen, insbesondere Mittelspannungen, insbesondere aller, der Akkumulatorzellen ausgebildet sein. Dies kann ermöglichen sicherheitskritische Zustände der Akkumulatorzellen zu erfassen. Zusätzlich oder alternativ kann die Leistungselektronik zur, insbesondere automatischen, Steuerung, insbesondere Beendigung, der Abgabe der elektrischen Antriebsleistung von dem Akkupack und/oder einer Aufnahme von elektrischer Ladeleistung durch den Akkupack, insbesondere in Abhängigkeit von den gemessenen Eigenschaften, ausgebildet sein. Dies kann ermöglichen sicherheitskritische Zustände der Akkumulatorzellen und somit des Akkupacks gering zu halten oder sogar ganz zu vermeiden. Weiter zusätzlich oder alternativ kann die Benutzerschnittstellenelektronik zur, insbesondere automatischen, Interaktion mit einem Benutzer, insbesondere zum Ausgeben eines Ladezustands des Akkupacks, ausgebildet sein. Weiter zusätzlich oder alternativ kann die Übertragungselektronik zur, insbesondere automatischen, kabellosen Übertragung von mindestens einem Betriebsparameter und/oder Betriebszustand ausgebildet sein.

Das erfindungsgemäße Bearbeitungssystem, insbesondere Garten-, Forst- und/oder Baubearbeitungssystem, umfasst bzw. weist einen, insbesondere den, Akkupack wie vorhergehend beschrieben und ein elektrisch angetriebenes, insbesondere das elektrisch angetriebene, Bearbeitungsgerät auf. Der Akkupack und das Bearbeitungsgerät sind zur elektrischen Verbindung miteinander zur, insbesondere automatischen, Versorgung des Bearbeitungsgeräts mit elektrischer Antriebsleistung von dem Akkupack ausgebildet bzw. konfiguriert.

Insbesondere kann das Bearbeitungsgerät ein handgeführtes, insbesondere bodengeführtes oder handgetragenes, Bearbeitungsgerät sein. Insbesondere handgeführtes, insbesondere handgetragenes, Bearbeitungsgerät kann bedeuten, dass das Bearbeitungsgerät eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann. Zusätzlich oder alternativ kann das Bearbeitungsgerät einen Elektroantriebsmotor aufweisen. Weiter zusätzlich oder alternativ können der Akkupack und das Bearbeitungsgerät zur, insbesondere werkzeugfrei und/oder zerstörungsfrei, lösbaren elektrischen Verbindung miteinander ausgebildet sein, insbesondere mittels Steckverbinder. Weiter zusätzlich oder alternativ können der Akkupack und das Bearbeitungsgerät zur, insbesondere werkzeugfrei und/oder zerstörungsfrei, lösbaren mechanischen Verbindung miteinander ausgebildet sein. Insbesondere kann das Bearbeitungsgerät zum Tragen des Akkupacks ausgebildet sein. Insbesondere kann das Bearbeitungsgerät eine Akkuaufnahme, insbesondere einen Akkuschacht, aufweisen, wobei die Akkuaufnahme zum Aufnehmen des Akkupacks ausgebildet sein kann. Alternativ kann der Akkupack in das Bearbeitungsgerät integriert sein. Weiter zusätzlich oder alternativ können der Akkupack und das Bearbeitungsgerät zur elektrischen Verbindung miteinander mittels Kontaktierens des mindestens einen Packkontaktierers und des, insbesondere mindestens einen, Gerätekontaktierers voneinander ausgebildet sein.

Das erfindungsgemäße Verfahren ist zur Herstellung bzw. Montage eines, insbesondere des, Akkupacks wie vorhergehend beschrieben ausgebildet bzw. konfiguriert bzw. vorgesehen.

Zusätzlich umfasst bzw. weist das Verfahren die Schritte auf: Anordnen der Zellhalterteile beieinander in der Halteanordnung gemeinsam zum Halten der Akkumulatorzellen, und, insbesondere zeitlich danach, Einfüllen des Schutzstoffes in die Füllform mindestens zu dem Großteil mittels der Zellhalterteile in der Halteanordnung gemeinsam gebildet zum Umschließen mindestens des Teils der Akkupackelektronik.

Zusätzlich oder alternativ umfasst bzw. weist das Verfahren die Schritte auf: Herstellen der mindestens einen Gussbaugruppe, insbesondere zeitlich danach bzw. zeitlich nach Beendigung des Herstellens, insbesondere Halten der Akkumulatorzellen mittels der Anzahl von Zellhalterteilen, und, insbesondere zeitlich danach, Kontaktieren des mindestens einen Zellterminals der mindestens einen der gehaltenen Akkumulatorzellen mittels des umgossenen Zellkontaktierers der Gussbaugruppe eines der Anzahl von Zellhalterteilen und den mindestens einen umgossenen Zellkontaktierer in sich vereinend.

Insbesondere kann das Verfahren aufweisen: Anordnen der Zellhalterteile beieinander in der Halteanordnung gemeinsam zum Halten der Akkumulatorzellen.

Das Verfahren kann aufweisen: insbesondere zeitlich vor einem Anordnen der Zellhalterteile beieinander in der Halteanordnung, Aufnehmen der Akkumulatorzellen in die Zellhalterteile bzw. Bestücken der Zellhalterteile mit den Akkumulatorzellen.

Das Verfahren kann aufweisen: Aufnehmen mindestens des Teils der Akkupackelektronik in die Füllform, insbesondere und, insbesondere zeitlich danach, Einfüllen des Schutzstoffes in die Füllform zum Umschließen des mindestens einen Teils der aufgenommenen Akkupackelektronik.

Das Herstellen der mindestens eine Gussbaugruppe kann aufweisen: Bereitstellen des mindestens einen, insbesondere zu umgießenden, Zellkontaktierers, insbesondere zeitlich danach, Gießen, insbesondere Spritzgießen, der Gussbaugruppe eines der Anzahl von Zellhalterteilen und den mindestens einen, insbesondere bereitgestellten und/oder dann, umgossenen Zellkontaktierer in sich vereinend, insbesondere des Gusselements, mittels Gießens des Zellhalterteils und Umgießens des bereitgestellten Zellkontaktierers durch Gießmasse in einem fließfähigen, insbesondere flüssigen oder plastischen bzw. plastisch verformbaren, Zustand, und, insbesondere zeitlich danach bzw. zeitlich nach Beendigung des Gießens, Aushärten der Gießmasse in einen festen Zustand.

Das Verfahren kann aufweisen: Anordnen der Gussbaugruppe, insbesondere des Gusselements, in der Halteanordnung.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Längsschnittansicht eines erfindungsgemäßen Akkupacks aufweisend einen erfindungsgemäßen Aufbau und Akkumulatorzellen und eines erfindungsgemäßen Verfahrens zur Herstellung des Akkupacks,

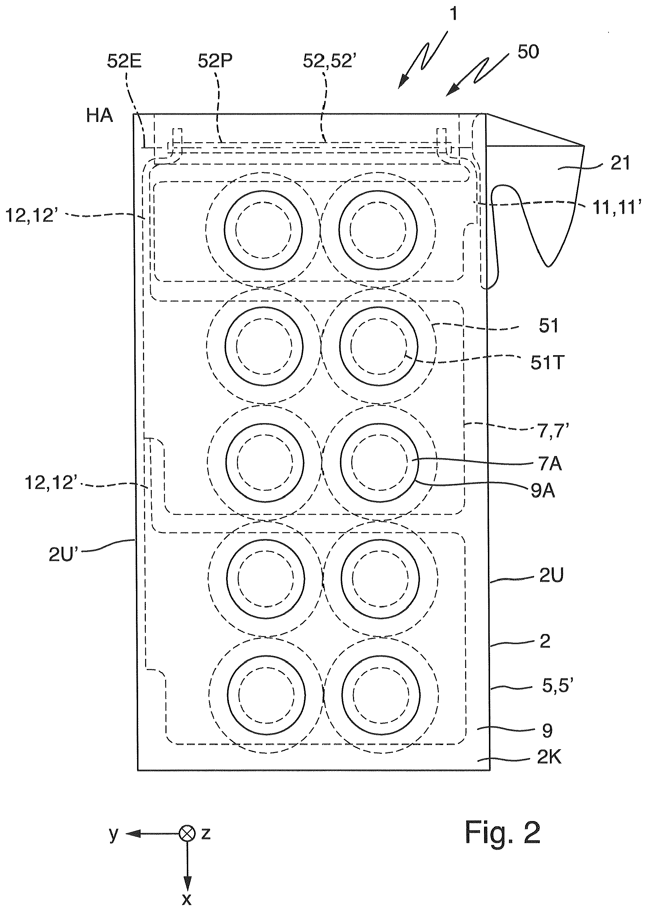

- Fig. 2: eine Draufsicht des Akkupacks aufweisend den Aufbau und die Akkumulatorzellen der Fig. 1 auf eine Stirnseite der Akkumulatorzellen und des Verfahrens der Fig. 1,
- Fig. 3: eine weitere Draufsicht des Akkupacks aufweisend den Aufbau und die Akkumulatorzellen der Fig. 1 auf eine gegenüberliegende Stirnseite der Akkumulatorzellen und des Verfahrens der Fig. 1, und
- Fig. 4: eine Perspektivansicht eines erfindungsgemäßen Bearbeitungssystems aufweisend den erfindungsgemäßen Akkupack der Fig. 1 und ein elektrisch angetriebenes Bearbeitungsgerät.

### DETAILLIERTE BESCHREIBUNG DER AUSFÜHRUNGSBEISPIELE

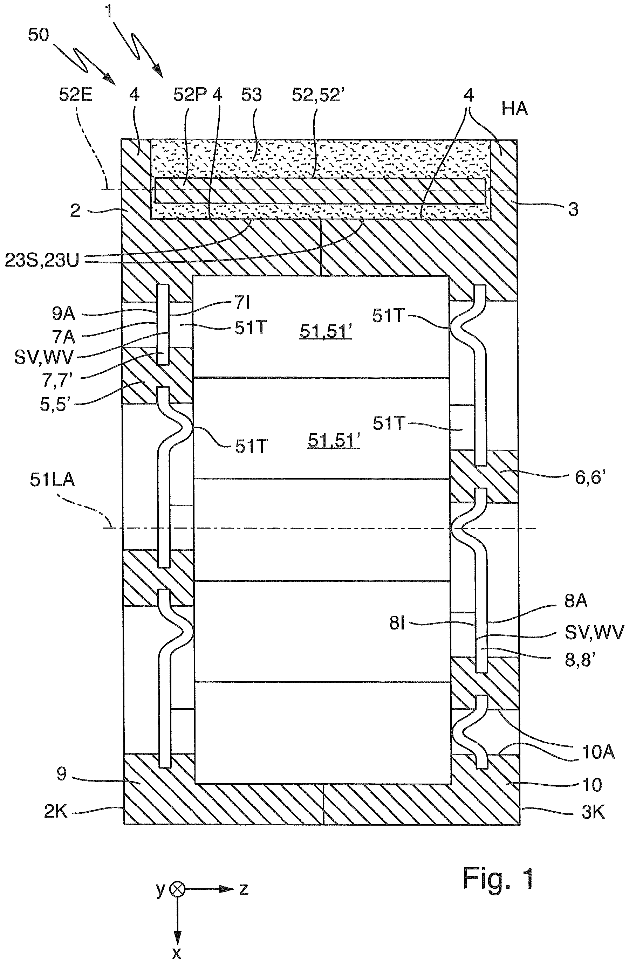

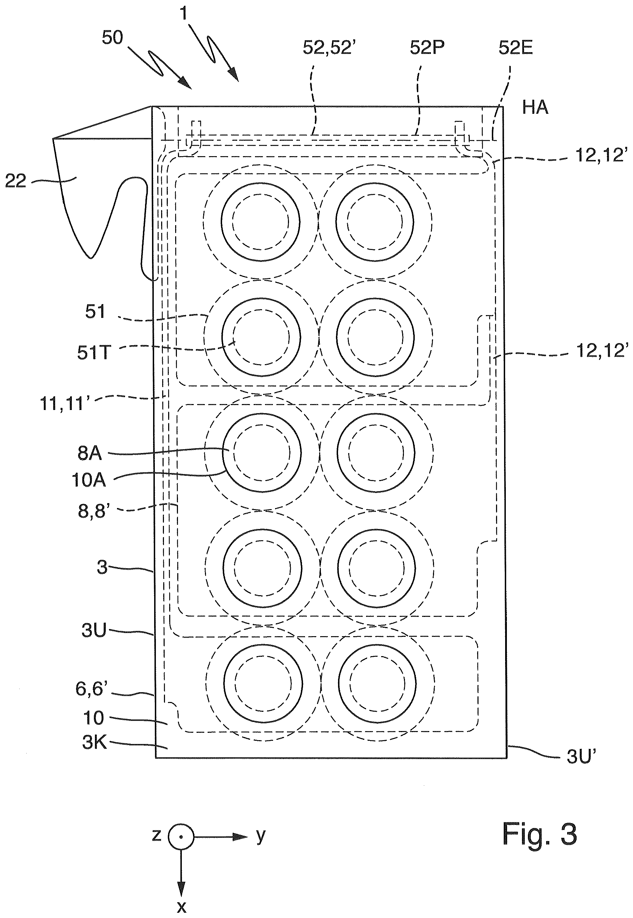

Fig. 1 und 3 zeigen einen erfindungsgemäßen Akkupack 50 zur Versorgung eines elektrisch angetriebenen Bearbeitungsgeräts 110 mit elektrischer Antriebsleistung AL und ein erfindungsgemäßes Verfahren zur Herstellung des Akkupacks 50.

Der Akkupack 50 weist einen erfindungsgemäßen Aufbau 1 und Akkumulatorzellen 51 auf.

In dem gezeigten Ausführungsbeispiel weist der Akkupack 50 zehn Akkumulatorzellen 51 auf. In alternativen Ausführungsbeispielen kann der Akkupack mindestens zwei, insbesondere mindestens fünf, insbesondere mehr als zehn, insbesondere mindestens zwanzig, Akkumulatorzellen aufweisen.

Der Aufbau 1 für den Akkupack 50 zur Versorgung des elektrisch angetriebenen Bearbeitungsgeräts 110 mit elektrischer Antriebsleistung AL weist eine Anzahl von Zellhalterteilen 2, 3 auf. Die Anzahl von Zellhalterteilen 2, 3 ist zum Halten von den Akkumulatorzellen 51 ausgebildet.

Zusätzlich weist die Anzahl von Zellhalterteilen 2, 3 mindestens, in dem gezeigten Ausführungsbeispiel genau, zwei Zellhalterteile 2, 3 auf. Mindestens zwei der, in dem gezeigten Ausführungsbeispiel die, Zellhalterteile 2, 3 sind zum Anordnen beieinander in einer Halteanordnung HA und in der Halteanordnung HA gemeinsam zum Halten von den Akkumulatorzellen 51 ausgebildet. Die Zellhalterteile 2, 3 bilden in der Halteanordnung HA gemeinsam mindestens einen Großteil einer Füllform 4, in dem gezeigten Ausführungsbeispiel vollständig die Füllform 4. Die Füllform 4 ist zum Einfüllen eines Schutzstoffes 53 zum Umschließen mindestens eines Teils einer Akkupackelektronik 52, in dem gezeigten Ausführungsbeispiel der vollständigen Akkupackelektronik 52, ausgebildet.

Zusätzlich in dem gezeigten Ausführungsbeispiel und alternativ in alternativen Ausführungsbeispielen weist der Aufbau 1 mindestens eine Gussbaugruppe 5, 6, in dem gezeigten Ausführungsbeispiel zwei Gussbaugruppen 5, 6, auf. Die, insbesondere jeweilige, Gussbaugruppe 5, 6 vereint in sich eines der Anzahl von Zellhalterteilen 2, 3 und mindestens einen umgossenen Zellkontaktierer 7, 8, und ist in dem gezeigten Ausführungsbeispiel zum Anordnen in der Halteanordnung HA ausgebildet, insbesondere was in alternativen Ausführungsbeispielen nicht zu sein braucht oder kann. Der Zellkontaktierer 7, 8 ist zum Kontaktieren mindestens eines Zellterminals 51T mindestens einer der gehaltenen Akkumulatorzellen 51 ausgebildet.

In dem gezeigten Ausführungsbeispiel vereint die, insbesondere jeweilige, Gussbaugruppe 5, 6 in sich drei umgossene Zellkontaktierer 7, 8. In alternativen Ausführungsbeispielen kann die, insbesondere jeweilige, Gussbaugruppe in sich nur einen einzigen umgossenen, zwei oder mindestens vier umgossene Zellkontaktierer vereinen.

Des Weiteren ist in dem gezeigten Ausführungsbeispiel der, insbesondere jeweilige, Zellkontaktierer 7, 8 zum Kontaktieren von zwei oder vier Zellterminals 51T von zwei oder vier der gehaltenen Akkumulatorzellen 51 ausgebildet. In alternativen Ausführungsbeispielen kann der, insbesondere jeweilige, Zellkontaktierer zum Kontaktieren nur eines einzigen Zellterminals nur einer einzigen der gehaltenen Akkumulatorzellen oder drei oder mindestens fünf Zellterminals von drei oder mindestens fünf der gehaltenen Akkumulatorzellen ausgebildet sein. Insbesondere sind die Akkumulatorzellen 51 mittels der Anzahl von Zellhalterteilen 2, 3 gehalten, in dem gezeigten Ausführungsbeispiel zwischen die Zellhalterteile 2, 3 aufgenommen.

Zusätzlich weist der Aufbau 1 die Akkupackelektronik 52 und den Schutzstoff 53 auf. Der Schutzstoff 53 ist in die Füllform 4 mindestens zu dem Großteil mittels der Zellhalterteile 2, 3 in der Halteanordnung HA gemeinsam gebildet eingefüllt. Der eingefüllte Schutzstoff 53 umschließt den mindestens einen Teil der Akkupackelektronik 52.

Das Verfahren weist die Schritte auf: Anordnen der Zellhalterteile 2, 3 beieinander in der Halteanordnung HA gemeinsam zum Halten der Akkumulatorzellen 51, und Einfüllen des Schutzstoffes 53 in die Füllform 4 mindestens zu dem Großteil mittels der Zellhalterteile 2, 3 in der Halteanordnung HA gemeinsam gebildet zum Umschließen mindestens des Teils der Akkupackelektronik 52.

Zusätzlich in dem gezeigten Ausführungsbeispiel und alternativ in alternativen Ausführungsbeispielen ist das mindestens eine Zellterminal 51T der mindestens einen der gehaltenen Akkumulatorzellen 51 mittels des umgossenen Zellkontaktierers 7, 8 der Gussbaugruppe 5, 6 eines der Anzahl von Zellhalterteilen 2, 3 und den mindestens einen umgossenen Zellkontaktierer 7, 8 in sich vereinend kontaktiert, in dem gezeigten Ausführungsbeispiel durch eine stoffschlüssige Verbindung SV, insbesondere eine Schweißverbindung WV

Das Verfahren weist die Schritte auf: Herstellen der mindestens einen Gussbaugruppe 5, 6, und Kontaktieren des mindestens einen Zellterminals 51T der mindestens einen der gehaltenen Akkumulatorzellen 51 mittels des umgossenen Zellkontaktierers 7, 8 der Gussbaugruppe 5, 6 eines der Anzahl von Zellhalterteilen 2, 3 und den mindestens einen umgossenen Zellkontaktierer 7, 8 in sich vereinend.

Im Detail sind die Zellhalterteile 2, 3 zum Anordnen in einer Anordnungsrichtung z ausgebildet, insbesondere angeordnet.

Zusätzlich sind die Zellhalterteile 2, 3 zum Halten von länglichen Akkumulatorzellen 51' mit Zelllängsachen 51LA nicht-orthogonal, in dem gezeigten Ausführungsbeispiel parallel, zu der Anordnungsrichtung z ausgebildet, insbesondere halten.

In dem gezeigten Ausführungsbeispiel weisen die, insbesondere länglichen, Akkumulatorzellen 51, 51', insbesondere jeweils, zwei Zellterminals 51T auf, insbesondere an, insbesondere in der Anordnungsrichtung z bzw. entlang der Zellenlängsachse 51LA, gegenüberliegenden Stirnseiten.

Außerdem ist die Füllform 4 zum Aufnehmen mindestens eines Teils der Akkupackelektronik 52, in dem gezeigten Ausführungsbeispiel der vollständigen Akkupackelektronik 52, und zum Einfüllen des Schutzstoffes 51 in einer zu der Anordnungsrichtung z nicht-parallelen, in dem gezeigten Ausführungsbeispiel orthogonalen, Aufnahme- und Einfüllrichtung x ausgebildet, insbesondere nimmt auf und ist eingefüllt.

Weiter ist die Füllform 4 zum Aufnehmen des mindestens einen Teils der Akkupackelektronik 52 aufweisend mindestens, in dem gezeigten Ausführungsbeispiel genau, eine Leiterplatte 52P mit einer Plattenebene 52E nicht-orthogonal, in dem gezeigten Ausführungsbeispiel parallel, zu der Anordnungsrichtung z, insbesondere und nicht-parallel, in dem gezeigten Ausführungsbeispiel orthogonal, zu der Aufnahme- und Einfüllrichtung x, ausgebildet, insbesondere nimmt auf.

Zusätzlich in dem gezeigten Ausführungsbeispiel und alternativ in alternativen Ausführungsbeispielen ist die Füllform 4 zum Aufnehmen des mindestens einen Teils der Akkupackelektronik 52 aufweisend die mindestens eine Leiterplatte 52P mit der Plattenebene 52E nicht-orthogonal, in dem gezeigten Ausführungsbeispiel parallel, zu einer Seite 23S, insbesondere einer Umfangsseite 23U, mindestens eines der Zellhalterteile 2, 3 ausgebildet, insbesondere nimmt auf.

Zudem weist mindestens eines der Zellhalterteile 2, 3, in dem gezeigten Ausführungsbeispiel die Gussbaugruppe 5, 6, eine Kontaktierungsseite 2K, 3K für das Kontaktieren des mindestens einen Zellterminals 51T der mindestens einen der gehaltenen Akkumulatorzellen 51 auf, insbesondere mittels des Zellkontaktierers 7, 8. Die Zellhalterteile 2, 3 weisen gemeinsam mindestens die von der Kontaktierungsseite 2K, 3K verschiedene Umfangsseite 23U auf. Die Füllform 4 ist an der Umfangsseite 23U angeordnet.

Des Weiteren weist die, insbesondere jeweilige, Gussbaugruppe 5, 6 ein Gusselement 9, 10 auf.

Zusätzlich weist das, insbesondere jeweilige, Gusselement 9, 10 das Zellhalterteil 2, 3 auf und umschließt den Zellkontaktierer 7, 8 und weist mindestens eine Aussparung 9A, 10A, in dem gezeigten Ausführungsbeispiel zehn Aussparungen 9A, 10A bzw. eine der Mehrzahl der Akkumulatorzellen 51 entsprechende, insbesondere gleiche, Mehrzahl von Aussparungen 9A, 10A, auf. Die Aussparung 9A, 10A lässt einen Teil einer Außenseite 7A, 8A und einen Teil einer der Außenseite 7A, 8A, in dem gezeigten Ausführungsbeispiel in der Anordnungsrichtung z, gegenüberliegenden Innenseite 7I, 8I des Zellkontaktierers 7, 8 zum Herstellen der stoffschlüssigen Verbindung SV, insbesondere der Schweißverbindung WV, mit dem Zellterminal 51T zum Kontaktieren des Zellterminals 51T frei.

Außerdem weist die, insbesondere jeweilige, Gussbaugruppe 5, 6 mindestens eine umgossene elektrische Leitung 11, 12 auf. Die, insbesondere jeweilige, Leitung 11, 12 ist zum elektrischen Verbinden des Zellkontaktierers 7, 8 mit der Akkupackelektronik 52 ausgebildet, insbesondere verbindet elektrisch.

In dem gezeigten Ausführungsbeispiel weist die, insbesondere jeweilige, Gussbaugruppe 5, 6, insbesondere nur, eine, insbesondere einzige, Leitung 11 in Form einer Leistungsleitung auf. Zusätzlich in dem gezeigten Ausführungsbeispiel und alternativ in alternativen Ausführungsbeispielen weist die, insbesondere jeweilige, Gussbaugruppe 5, 6 mindestens eine Leitung 12 in Form einer Messleitung, in dem gezeigten Ausführungsbeispiel mindestens zwei Leitungen 12 in Form von Messleitungen, auf.

Im Detail ist der, insbesondere jeweilige, Zellkontaktierer 7, 8 an der Kontaktseite 2K, 3K des Zellhalterteils 2, 3 angeordnet. Die, insbesondere jeweilige, Leitung 11, 12 verläuft mindestens abschnittsweise, in dem gezeigten Ausführungsbeispiel vollständig, an einer von der Kontaktierungsseite 2K, 3K, und in dem gezeigten Ausführungsbeispiel von der Umfangsseite 23U, verschiedenen Umfangsseite 2U, 2U', 3U, 3U' des Zellhalterteils 2, 3 entlang, in dem gezeigten Ausführungsbeispiel von dem Zellkontaktierer 7, 8 bis zu der Akkupackelektronik 52 und/oder in der Aufnahme- und Einfüllrichtung x.

In dem gezeigten Ausführungsbeispiel sind die Leitung 11 in Form der Leistungsleitung und die, insbesondere beiden, Leitungen 12 in Form von Messleitungen voneinander und von den Zellkontaktierern 7, 8, insbesondere maximal möglich, räumlich getrennt. In anderen Worten: die Leitung 11 verläuft mindestens abschnittsweise an der einen Umfangsseite 2U, 3U entlang und die Leitung 12 verläuft mindestens abschnittsweise an der anderen bzw. verschiedenen, insbesondere gegenüberliegenden, Umfangsseite 2U', 3U' entlang.

Weiter ist der, insbesondere jeweilige, Zellkontaktierer 7, 8 starr. In dem gezeigten Ausführungsbeispiel weist der, insbesondere jeweilige, Zellkontaktierer 7, 8 ein Blech 7', 8' auf, insbesondere ist das Blech 7', 8'.

Zusätzlich in dem gezeigten Ausführungsbeispiel und alternativ in alternativen Ausführungsbeispielen ist die, insbesondere jeweilige, Leitung 11, 12 starr. In dem gezeigten Ausführungsbeispiel weist die, insbesondere jeweilige, Leitung 11, 12 ein Blech 11', 12' auf, insbesondere ist das Blech 11', 12'.

In dem gezeigten Ausführungsbeispiel ist die mindestens eine umgossene elektrische Leitung 11, 12, insbesondere starr bzw. in Form des Blechs 11', 12', aus der Gussbaugruppe 5, 6, insbesondere dem Gusselement 9, 10, herausgeführt, und insbesondere in die Füllform 4 hineingeführt, insbesondere zum, insbesondere elektrischen, Kontaktieren der Akkupackelektronik 52.

Zusätzlich in dem gezeigten Ausführungsbeispiel und alternativ in alternativen Ausführungsbeispielen vereint die, insbesondere jeweilige, Gussbaugruppe 5, 6 in sich mindestens einen umgossenen Packkontaktierer 21, 22. Der Packkontaktierer 21, 22 ist zum Kontaktieren mindestens eines Gerätekontaktierers des Bearbeitungsgeräts 110 ausgebildet.

In dem gezeigten Ausführungsbeispiel vereint die, insbesondere jeweilige, Gussbaugruppe 5, 6 in sich nur einen einzigen umgossenen Packkontaktierer 21, 22. In alternativen Ausführungsbeispielen kann die, insbesondere jeweilige, Gussbaugruppe in sich mindestens zwei umgossene Packkontaktierer vereinen.

Weiter zusätzlich in dem gezeigten Ausführungsbeispiel und alternativ in alternativen Ausführungsbeispielen weist das, insbesondere jeweilige, Gusselement 9, 10 das Zellhalterteil 2, 3 auf und umschließt den Zellkontaktierer 7, 8 und ist in sich grenzflächenfrei.

Zudem ist die, insbesondere jeweilige, Gussbaugruppe 5, 6 eine Spritzgussbaugruppe 5', 6'. Der, insbesondere jeweilige, Zellkontaktierer 7, 8 ist umspritzt.

In alternativen Ausführungsbeispielen kann die Gussbaugruppe, insbesondere das Gusselement, soweit vorhanden, additiv bzw. mittels 3D-Druck gefertigt sein und/oder werden. In nicht-erfindungsgemäßen Beispielen braucht oder kann eine Baugruppe oder ein Element, soweit vorhanden, nicht eine Gussbaugruppe oder ein Gusselement sein. Insbesondere kann die Baugruppe, insbesondere das Element, soweit vorhanden, additiv bzw. mittels 3D-Druck gefertigt sein und/oder werden.

Des Weiteren weist die Akkupackelektronik 52 eine Mess-, Leistungs-, Benutzerschnittstellen- und/oder Übertragungselektronik 52' auf, insbesondere ist die Mess-, Leistungs-, Benutzerschnittstellen- und/oder Übertragungselektronik 52'.

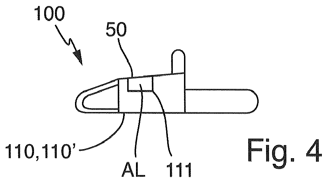

Fig. 4 zeigt ein erfindungsgemäßes Bearbeitungssystem 100. Das Bearbeitungssystem 100 weist den Akkupack 50 und das elektrisch angetriebene Bearbeitungsgerät 110 auf. Der Akkupack 50 und das Bearbeitungsgerät 110 sind zur elektrischen Verbindung miteinander zur Versorgung des Bearbeitungsgeräts 110 mit elektrischer Antriebsleistung AL von dem Akkupack 50 ausgebildet, insbesondere elektrisch verbunden, insbesondere mittels Kontaktierens des mindestens einen Packkontaktierers 21, 22 und des mindestens einen Gerätekontaktierers voneinander.

Im Detail weist das Bearbeitungsgerät 110 eine Akkuaufnahme 111 auf. Die Akkuaufnahme 111 ist zum Aufnehmen des Akkupacks 50 ausgebildet, insbesondere ist der Akkupack 50 aufgenommen.

In dem gezeigten Ausführungsbeispiel ist das Bearbeitungsgerät 110 eine Säge 110'. In alternativen Ausführungsbeispielen kann das Bearbeitungsgerät ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere sein.

In nicht-erfindungsgemäßen Beispielen braucht oder kann eine Form nicht eine Füllform sein bzw. die Form braucht oder kann nicht zum Einfüllen eines Schutzstoffes ausgebildet sein. Insbesondere kann die Form zum Aufnehmen mindestens eines Teils der Akkupackelektronik, insbesondere der vollständigen Akkupackelektronik, ausgebildet sein. Zusätzlich oder alternativ kann ein, insbesondere der, Aufbau einen Deckel aufweisen, wobei der Deckel zum abgedichteten Verschließen der Form, insbesondere mit der aufgenommenen Akkupackelektronik, ausgebildet sein kann. Insbesondere kann die Form, insbesondere mit der aufgenommenen Akkupackelektronik, mittels des Deckels abgedichtet verschlossen sein.

Wie die gezeigten und oben erläuterten Ausführungsbeispiele deutlich machen, stellt die Erfindung einen vorteilhaften Aufbau für einen Akkupack zur Versorgung eines elektrisch angetriebenen Bearbeitungsgeräts mit elektrischer Antriebsleistung, einen vorteilhaften Akkupack zur Versorgung eines elektrisch angetriebenen Bearbeitungsgeräts mit elektrischer Antriebsleistung aufweisend einen solchen Aufbau, ein vorteilhaftes Bearbeitungssystem aufweisend einen solchen Akkupack und ein elektrisch angetriebenes Bearbeitungsgerät und ein vorteilhaftes Verfahren zur Herstellung eines solchen Akkupacks bereit, wobei das Verfahren und der Aufbau und somit der Akkupack und somit das Bearbeitungssystem jeweils verbesserte Eigenschaften aufweisen.

## Patentansprüche

1. Aufbau (1) für einen Akkupack (50) zur Versorgung eines elektrisch angetriebenen Bearbeitungsgeräts (110) mit elektrischer Antriebsleistung (AL), wobei der Aufbau (1) aufweist:
- eine Anzahl von Zellhalterteilen (2, 3), wobei die Anzahl von Zellhalterteilen (2, 3) zum Halten von Akkumulatorzellen (51) ausgebildet ist,
**dadurch gekennzeichnet,**
- **dass** die Anzahl von Zellhalterteilen (2, 3) mindestens zwei Zellhalterteile (2, 3) aufweist, wobei mindestens zwei der Zellhalterteile (2, 3) zum Anordnen beieinander in einer Halteanordnung (HA) und in der Halteanordnung (HA) gemeinsam zum Halten von den Akkumulatorzellen (51) ausgebildet sind, wobei die Zellhalterteile (2, 3) in der Halteanordnung (HA) gemeinsam mindestens einen Großteil einer Füllform (4) bilden, wobei die Füllform (4) zum Einfüllen eines Schutzstoffes (53) zum Umschließen mindestens eines Teils einer Akkupackelektronik (52) ausgebildet ist, und/oder
- **dass** der Aufbau (1) mindestens eine Gussbaugruppe (5, 6) aufweist, wobei die Gussbaugruppe (5, 6) eines der Anzahl von Zellhalterteilen (2, 3) und mindestens einen umgossenen Zellkontaktierer (7, 8) in sich vereint, wobei der Zellkontaktierer (7, 8) zum Kontaktieren mindestens eines Zellterminals (51T) mindestens einer der gehaltenen Akkumulatorzellen (51) ausgebildet ist.

2. Aufbau (1) nach Anspruch 1,
- wobei die Zellhalterteile (2, 3) zum Anordnen in einer Anordnungsrichtung (z) und zum Halten von länglichen Akkumulatorzellen (51') mit Zelllängsachen (51LA) nicht-orthogonal, insbesondere parallel, zu der Anordnungsrichtung (z) ausgebildet sind.

3. Aufbau (1) nach einem der vorhergehenden Ansprüche,
- wobei die Zellhalterteile () zum Anordnen in einer Anordnungsrichtung (z) ausgebildet sind, und wobei die Füllform (4) zum Aufnehmen mindestens eines Teils der Akkupackelektronik (52) und zum Einfüllen des Schutzstoffes (53) in einer zu der Anordnungsrichtung (z) nicht-parallelen, insbesondere orthogonalen, Aufnahme- und Einfüllrichtung (x) ausgebildet ist, und/oder
- wobei die Zellhalterteile (2, 3) zum Anordnen in einer Anordnungsrichtung (z) ausgebildet sind, und wobei die Füllform (4) zum Aufnehmen mindestens eines Teils der Akkupackelektronik (52) aufweisend mindestens eine Leiterplatte (52P) mit einer Plattenebene (52E) nicht-orthogonal, insbesondere parallel, zu der Anordnungsrichtung (z) ausgebildet ist, und/oder
- wobei die Füllform (4) zum Aufnehmen mindestens eines Teils der Akkupackelektronik (52) aufweisend mindestens eine Leiterplatte (52P) mit einer Plattenebene (52E) nicht-orthogonal, insbesondere parallel, zu einer Seite (23S), insbesondere einer Umfangsseite (23U), mindestens eines der Zellhalterteile (2, 3) ausgebildet ist.

4. Aufbau (1) nach einem der vorhergehenden Ansprüche,
- wobei mindestens eines der Zellhalterteile (2, 3) eine Kontaktierungsseite (2K, 3K) für ein Kontaktieren mindestens eines Zellterminals (51T) mindestens einer der gehaltenen Akkumulatorzellen (51) aufweist, und wobei die Zellhalterteile (2, 3) gemeinsam mindestens eine von der Kontaktierungsseite (2K, 3K) verschiedene Umfangsseite (23U) aufweisen, wobei die Füllform (4) an der Umfangsseite (23U) angeordnet ist.

5. Aufbau (1) nach einem der vorhergehenden Ansprüche,
- wobei die Gussbaugruppe (5, 6) ein Gusselement (9, 10) aufweist, wobei das Gusselement (9, 10) das Zellhalterteil (2, 3) aufweist und den Zellkontaktierer (7, 8) umschließt und mindestens eine Aussparung (9A, 10A) aufweist, wobei die Aussparung (9A, 10A) einen Teil einer Außenseite (7A, 8A,) und einen Teil einer der Außenseite (7A; 8A) gegenüberliegenden Innenseite (7I, 8I) des Zellkontaktierers (7, 8) zum Herstellen einer stoffschlüssigen Verbindung (SV), insbesondere einer Schweißverbindung (WV), mit dem Zellterminal (51T) zum Kontaktieren des Zellterminals (51T) freilässt.

6. Aufbau (1) nach einem der vorhergehenden Ansprüche,
- wobei die Gussbaugruppe (5, 6) mindestens eine umgossene elektrische Leitung (11, 12) aufweist, wobei die Leitung (11, 12) zum elektrischen Verbinden des Zellkontaktierers (7, 8) mit einer Akkupackelektronik (52) ausgebildet ist.

7. Aufbau (1) nach Anspruch 6,
- wobei der Zellkontaktierer (7, 8) an einer Kontaktseite (2K, 3K) des Zellhalterteils (2, 3) angeordnet ist, und
- wobei die Leitung (11, 12) mindestens abschnittsweise an einer von der Kontaktierungsseite (2K, 3K) verschiedenen Umfangsseite (2U, 2U' 3U, 3U') des Zellhalterteils (2, 3) entlang verläuft.

8. Aufbau (1) nach einem der vorhergehenden Ansprüche, insbesondere nach Anspruch 6 oder 7,
- wobei der Zellkontaktierer (7, 8) starr ist, insbesondere ein Blech (7', 8') aufweist, insbesondere ist, und/oder
- wobei die Leitung (11, 12) starr ist, insbesondere ein Blech (11', 12') aufweist, insbesondere ist.

9. Aufbau (1) nach einem der vorhergehenden Ansprüche,
- wobei die Gussbaugruppe (5, 6) mindestens einen umgossenen Packkontaktierer (21, 22) in sich vereint, wobei der Packkontaktierer (21, 22) zum Kontaktieren mindestens eines Gerätekontaktierers des Bearbeitungsgeräts (110) ausgebildet ist.

10. Aufbau (1) nach einem der vorhergehenden Ansprüche,
- wobei die Gussbaugruppe (5, 6) ein Gusselement (9, 10) aufweist, wobei das Gusselement (9, 10) das Zellhalterteil (2, 3) aufweist und den Zellkontaktierer (7, 8) umschließt und in sich grenzflächenfrei ist.

11. Aufbau (1) nach einem der vorhergehenden Ansprüche,
- wobei die Gussbaugruppe (5, 6) eine Spritzgussbaugruppe ist (5', 6'), und wobei der Zellkontaktierer (7, 8) umspritzt ist.

12. Akkupack (50) zur Versorgung eines elektrisch angetriebenen Bearbeitungsgeräts (110) mit elektrischer Antriebsleistung (AL), wobei der Akkupack (50) aufweist:
- einen Aufbau (1) nach einem der vorhergehenden Ansprüche, und
- Akkumulatorzellen (51), wobei die Akkumulatorzellen (51) mittels der Anzahl von Zellhalterteilen (2, 3) gehalten sind,
**dadurch gekennzeichnet,**
- **dass** der Aufbau (1) eine Akkupackelektronik (52) und einen Schutzstoff (53) aufweist, wobei der Schutzstoff (53) in die Füllform (4) mindestens zu dem Großteil mittels der Zellhalterteile (2, 3) in der Halteanordnung (HA) gemeinsam gebildet eingefüllt ist, und wobei der eingefüllte Schutzstoff (53) mindestens einen Teil der Akkupackelektronik (52) umschließt, und/oder
- **dass** mindestens ein Zellterminal (51T) mindestens einer der gehaltenen Akkumulatorzellen (51) mittels des umgossenen Zellkontaktierers (7, 8) der Gussbaugruppe (5, 6) eines der Anzahl von Zellhalterteilen (2, 3) und den mindestens einen umgossenen Zellkontaktierer (7, 8) in sich vereinend kontaktiert ist.

13. Akkupack (50) nach Anspruch 12,
- wobei die Akkupackelektronik (52) eine Mess-, Leistungs-, Benutzerschnittstellen- und/oder Übertragungselektronik (52') aufweist, insbesondere ist.

14. Bearbeitungssystem (100), wobei das Bearbeitungssystem (100) aufweist:
- einen Akkupack (50) nach Anspruch 12 oder 13, und
- ein elektrisch angetriebenes Bearbeitungsgerät (110),
- wobei der Akkupack (50) und das Bearbeitungsgerät (110) zur elektrischen Verbindung miteinander zur Versorgung des Bearbeitungsgeräts (110) mit elektrischer Antriebsleistung (AL) von dem Akkupack (50) ausgebildet sind.

15. Verfahren zur Herstellung eines Akkupacks (50) nach Anspruch 12 oder 13, **dadurch gekennzeichnet,**
- **dass** das Verfahren die Schritte aufweist: Anordnen der Zellhalterteile (2, 3) beieinander in der Halteanordnung (HA) gemeinsam zum Halten der Akkumulatorzellen (51), und Einfüllen des Schutzstoffes (53) in die Füllform (4) mindestens zu dem Großteil mittels der Zellhalterteile (2, 3) in der Halteanordnung (HA) gemeinsam gebildet zum Umschließen mindestens des Teils der Akkupackelektronik (52), und/oder
- **dass** das Verfahren die Schritte aufweist: Herstellen der mindestens einen Gussbaugruppe (5, 6), Halten der Akkumulatorzellen (51) mittels der Anzahl von Zellhalterteilen (2, 3), und Kontaktieren des mindestens einen Zellterminals (51T) der mindestens einen der gehaltenen Akkumulatorzellen (51) mittels des umgossenen Zellkontaktierers (7, 8) der Gussbaugruppe (5, 6) eines der Anzahl von Zellhalterteilen (2, 3) und den mindestens einen umgossenen Zellkontaktierer (7, 8) in sich vereinend.
